# EUROPEAN PATENT APPLICATION

(11) **EP 2 590 121 A1**
(43) Date of publication of application: **08.05.2013**
(21) Application number: 12172223.5
(22) Date of filing: 15.06.2012
(51) Int. Cl.: G06Q 10/06, G06Q 10/10, G06F 17/30

(54) **Method and system for providing related technology service**

(30) Priority: 02.11.2011 KR 20110113327
(71) Applicant: Korea Institute Of Science and Technology Information, Daejeon 305-806 (KR)
(72) Inventor: Jung, Han Min, 305-333 Daejeon (KR); Lee, Mi Kyoung, 305-727 Daejeon (KR); Sung, Won Kyung, 305-390 Daejeon (KR); Kim, Pyung, 305-150 Daejeon (KR); Lee, Seung Woo, 305-333 Daejeon (KR); Seo, Dong Min, 302-282 Daejeon (KR); Kim, Jin Hyung, 448-160 Gyeonggi-do (KR); Lee, Jin Hee, 305-301 Daejeon (KR)
(74) Representative: Regimbeau

(57) **Abstract**

The present invention relates to a method and system for providing a related technology service, and the method of providing a related technology service by a related technology service providing apparatus includes the steps of (a) acquiring conduct agents of a specific technology; (b) acquiring key research technologies of each acquired conduct agent; and (c) obtaining a research relation between each key research technology and the specific technology. According to the present invention, a research relation between a specific technology of conduct agents which study the specific technology targeting the specific technology and key research technologies can be provided.

## Description

### BACKGROUND OF THE INVENTION

### Field of the Invention

The present invention relates to a method and system for providing a related technology service, and more specifically, to a method and system for providing a related technology service, which acquires conduct agents of a specific technology, acquires key research technologies of each acquired conduct agent, and obtains a research relation between each key research technology and the specific technology.

### Background of the Related Art

The world is transferred to a knowledge-based industrial society in which knowledge and information determine competitiveness of a country, and particularly, competitiveness in science and technology of a country is recognized as a foundation of competitiveness of the country.

Therefore, many countries in the world are trying to draw and select core technologies and research subjects in advance and concentrate on research and development of the technologies so as to survive future competitions.

On this reason, the Gartner, a world-famous information technology research and consulting company, demonstrates the lifecycle of a technology through a graph of technology lifecycle from the aspect of exaggerative advertisement of the technology. The graph of technology lifecycle proposes only technologies belonging to a stage.

Therefore, it is required to provide a technique capable of presenting a research relation between a specific technology of conduct agents which study the specific technology targeting the specific technology and key research technologies.

### SUMMARY OF THE INVENTION

Accordingly, the present invention has been made in view of the above-mentioned problems occurring in the prior art, and it is an object of the present invention to provide a method and system for providing a related technology service, which can present a research relation between a specific technology of conduct agents which study the specific technology targeting the specific technology and key research technologies.

To accomplish the above objects, according to an aspect of the present invention, there is provided a computer implemented method of providing a related technology service by a related technology service providing apparatus, the method comprising the steps of: (a) acquiring conduct agents of a specific technology; (b) acquiring key research technologies of each acquired conduct agent; and (c) obtaining a research relation between each key research technology and the specific technology.

The related technology service providing method may further comprise the step of, before step (a), analyzing documents stored in a multi-document providing apparatus, extracting and accumulating technologies and conduct agents, and constructing a database for storing conduct agents of each technology or research technologies studied by each conduct agent.

The database stores at least one of conduct agents of each technology, research technologies of each conduct agent, joint research agents of each research technology, the number of research documents of each conduct agent, and an accomplishment point calculated by applying a weighting factor of each time point or document type to the number of research documents.

Step (c) includes the steps of accumulating the acquired key research technologies of each conduct agent for each key research technology and calculating a frequency or a sum of research ratios of each key research technology, and obtaining a relation between the specific technology and each key research technology using the frequency or the sum of research ratios of each key research technology.

The related technology service providing method may further comprise the step of, after step (c), sorting the key research technologies in order of the research relation and providing the key research technologies as a list.

In addition, the related technology service providing method may further comprise the step of, if a specific key research technology is selected from the list of the key research technologies, sorting and displaying the specific key research technology and conduct agents of the specific technology in order of a research ratio.

In addition, if there are common conduct agents among the displayed conduct agents, the related technology service providing method interconnects and displays corresponding common conduct agents.

To accomplish the above objects, according to another aspect of the present invention, there is provided a related technology service providing apparatus including a storage and a processor, the apparatus comprising a technology relation calculation module for acquiring conduct agents of a specific technology; acquiring key research technologies of each acquired conduct agent; and obtaining a research relation between each key research technology and the specific technology.

The related technology service providing apparatus may further comprise a database for storing at least one of conduct agents of each technology, research technologies of each conduct agent, joint research agents of each research technology, the number of research documents of each conduct agent, and an accomplishment point calculated by applying a weighting factor of each time point or document type to the number of research documents.

In addition, the related technology service providing apparatus may further comprise a database construction module for analyzing documents stored in a multi-document providing apparatus, extracting and accumulating technologies and conduct agents, and constructing a database for storing conduct agents of each technology or research technologies studied by each conduct agent.

In addition, the related technology service providing apparatus may further comprise a related technology information providing module for sorting the key research technologies in descending order of the value of relation and providing the key research technologies as a list, by the processor.

If a specific key research technology is selected from the list of the key research technologies, the related technology information providing module sorts and displays the specific key research technologies and conduct agents of the specific technology in order of a research ratio, by the processor.

In addition, if there are common conduct agents among the displayed conduct agents, the related technology information providing module interconnects and displays corresponding common conduct agents, by the processor.

The related technology information providing module accumulates the acquired key research technologies of each conduct agent for each key research technology and calculating a frequency or a sum of research ratios of each key research technology, and obtains a relation between the specific technology and each key research technology using the frequency or the sum of research ratios of each key research technology.

### BRIEF DESCRIPTION OF THE DRAWINGS

FIG. 1 is a view showing a related technology service providing system according to the present invention.

FIG. 2 is a block diagram schematically showing the configuration of a related technology service providing apparatus according to the present invention.

FIG. 3 is a block diagram specifically showing the configuration of a database construction module of FIG. 2.

FIG. 4 is a flowchart illustrating a method of providing a related technology service for a specific technology by a related technology service providing apparatus according to the present invention.

FIGS. 5 and 6 are views showing examples of a related technology information providing screen according to the present invention.

### DESCRIPTION OF SYMBOLS

100: Multi-document providing apparatus
200: Related technology service providing apparatus
210: Database construction module
220: Database
230: Input module
240: Technology relation calculation module
250: Related technology information providing module

### DETAILED DESCRIPTION OF THE PREFERRED EMBODIMENT

Hereinafter, an explanation on a ... according to a first embodiment of the present invention will be given with reference to the attached drawings.

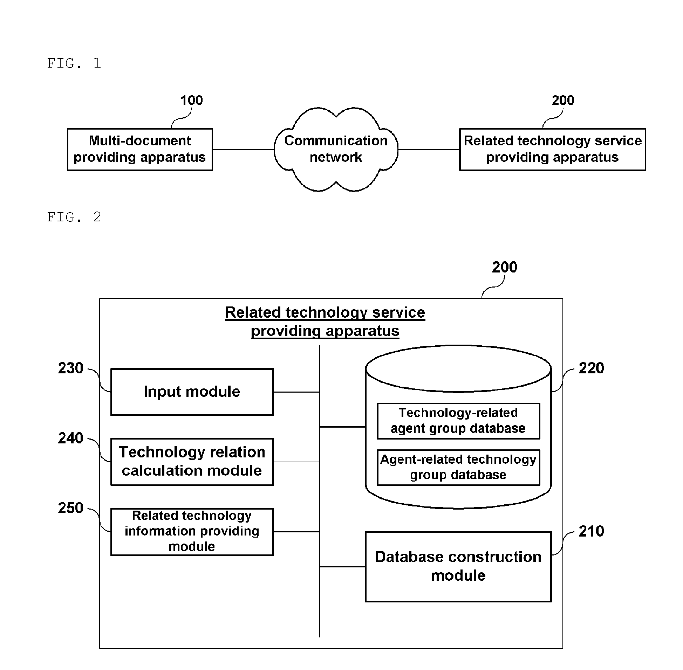

FIG. 1 is a view showing a related technology service providing system according to the present invention.

Referring to FIG. 1, the related technology service providing system includes a multi-document providing apparatus 100 and a related technology service providing apparatus 200.

The multi-document providing apparatus 100 integrates at least one of documents among papers, patents, reports, academic data, newspapers, and standards.

The related technology service providing apparatus 200 acquires conduct agents of a specific technology, acquires key research technologies of each acquired conduct agent, obtains a research relation between each key research technology and the specific technology, sorts the key research technologies in order of the research relation, and provides a list of the key research technologies.

The related technology service providing apparatus 200 functioning as described above will be described in detail with reference to FIG. 2.

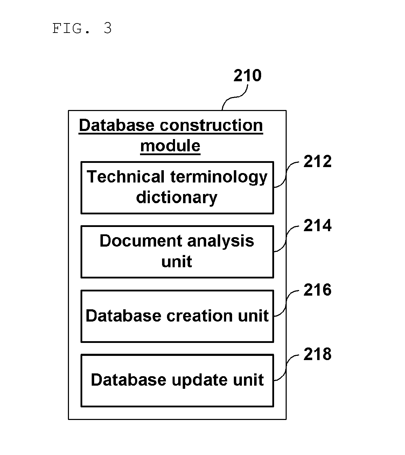

FIG. 2 is a block diagram schematically showing the configuration of a related technology service providing apparatus according to the present invention, and FIG. 3 is a block diagram specifically showing the configuration of a database construction module of FIG. 2.

Referring to FIG. 2, the related technology service providing apparatus 200 includes a database construction module 210, a database 220, an input module 230, a technology relation calculation module 240, and a related technology information providing module 250.

The database construction module 210 analyzes the documents stored in the multi-document providing apparatus, extracts and accumulates technologies and conduct agents, and constructs a database for storing conduct agents of each technology or technologies studied by each conduct agent.

Referring to FIG. 3 for the database construction module 210, the database construction module 210 includes a technical terminology dictionary 212, a document analysis unit 214, a database creation unit 216, and a database update unit 218.

Technical terminologies are defined in the technical terminology dictionary 212. The technical terminologies are terminologies used in various fields such as a smart phone, an electronic paper, a PC and the like.

The document analysis unit 214 analyzes the documents stored in the multi-document providing apparatus, acquires documents including the terminologies stored in the technical terminology dictionary, and extracts conduct agents from the documents. That is, the document analysis unit 214 analyzes the documents using a method such as text mining, metadata analysis or the like, and extracts conduct agents which have announced the technologies and documents thereof as a result of the analysis. The conduct agents are countries, institutes, researchers and the like who have published the documents. For example, the document analysis unit 214 may extract technologies and conduct agents by analyzing bibliographies of the documents.

The database creation unit 216 accumulates the conduct agents of each technology or the technologies of each conduct agent acquired by the document analysis unit 214 and constructs the database 220 which stores the conduct agents of each technology or the technologies studied by each conduct agent.

Accordingly, the database created by the database creation unit 216 includes a technology-related agent group database for storing conduct agents of each technology and an agent-related technology group database for storing technologies studied by each conduct agent.

The agent-related technology group database stores information such as research technologies studied by each conduct agent, joint research agents of each research technology, the number of research documents of each conduct agent, and an accomplishment point calculated by applying a weighting factor of each time point or document type to the number of research documents.

The technology-related agent group database and the agent-related technology group database can be constructed as a single database. In this case, the database 220 stores information such as conduct agents of each technology, research technologies of each conduct agent, joint research agents of each research technology, the number of research documents of each conduct agent, and an accomplishment point calculated by applying a weighting factor of each time point or document type to the number of research documents.

If update of a document stored in the multi-document providing apparatus is sensed, the database update unit 218 acquires documents containing the technologies defined in the technical terminology dictionary by analyzing the updated document, extracts and accumulates conduct agents from the acquired documents, and updates the database 220.

The input module 230 performs an interface with a user and performs a function of receiving a research relation providing command for a specific technology from the user. For example, the input module 230 refers to an interface module or a key input unit connected to a user terminal through a communication network.

The technology relation calculation module 240 acquires conduct agents of a specific technology selected through the input module 230, acquires key research technologies of each acquired conduct agent, and obtains a research relation between each key research technology and the specific technology.

That is, the technology relation calculation module 240 acquires conduct agents of the specific technology by searching the database 220 and acquires key research technologies of each acquired conduct agent. Then, the technology relation calculation module 240 accumulates the key research technologies of each acquired conduct agent for each key research technology and calculates a frequency of each key research technology or a sum of research ratios. Then, the technology relation calculation module 240 obtains a relation between the specific technology and each key research technology using the acquired frequency or the sum of research ratios of each key research technology.

Here, it is assumed that the frequency or the sum of research ratios of each key research technology is a value of relation, and the relation between the specific technology and a key research technology is high if the value of relation is large, whereas the relation between the specific technology and a key research technology is low if the value of relation is small. The research ratio refers to a percentage of a research with respect to a corresponding research technology of each conduct agent. For example, in the case of institute A, the research ratios are 43% for technology a, 23% for technology b, 11% for technology c and the like, and the research ratios of institute B are 11% for technology a, 33% for technology c, 10% for technology d and the like.

Accordingly, the sum of research ratios refers to addition of the research ratios for each research technology of each conduct agent, and it is expressed as {(43%(technology a of institute A) + 11%(technology a of institute B) + ...) in the case of technology a.

The related technology information providing module 250 sorts the key research technologies in descending order of the value of relation calculated by the technology relation calculation module 240 and extracts and displays a list of a certain number of research technologies ranked on the top.

In addition, if a specific key research technology is selected from the list of the key research technologies, the related technology information providing module 250 sorts and displays the specific key research technology and conduct agents of the specific technology in order of the research ratio. At this point, if there are common conduct agents among the displayed conduct agents, the related technology information providing module 250 interconnects corresponding common conduct agents and displays the common conduct agents by separating the common conduct agents into common conduct agents in a mutual cooperative relation and common conduct agents not in a mutual cooperative relation.

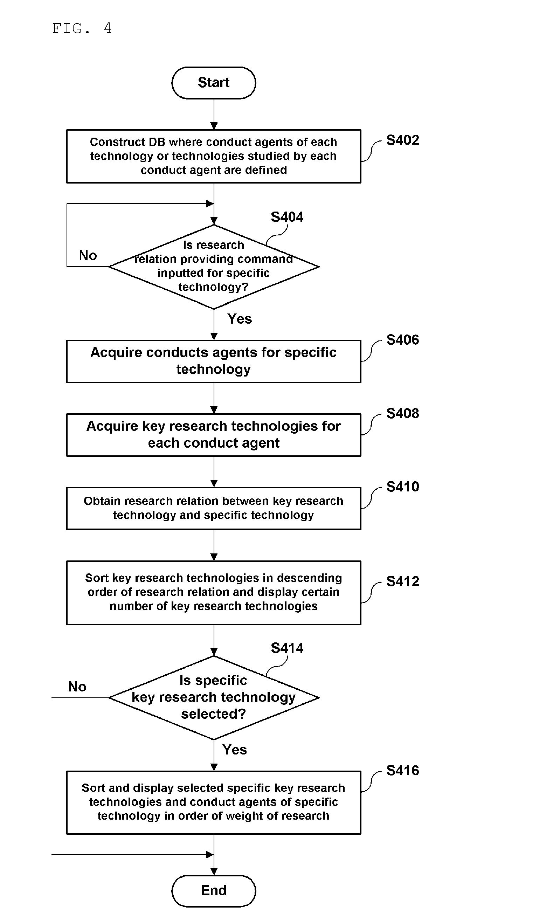

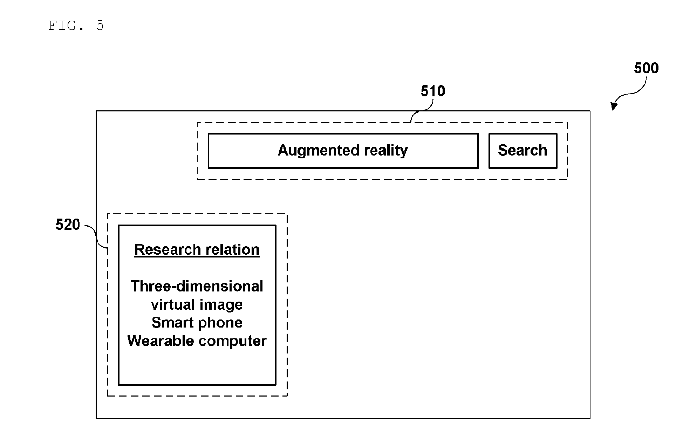

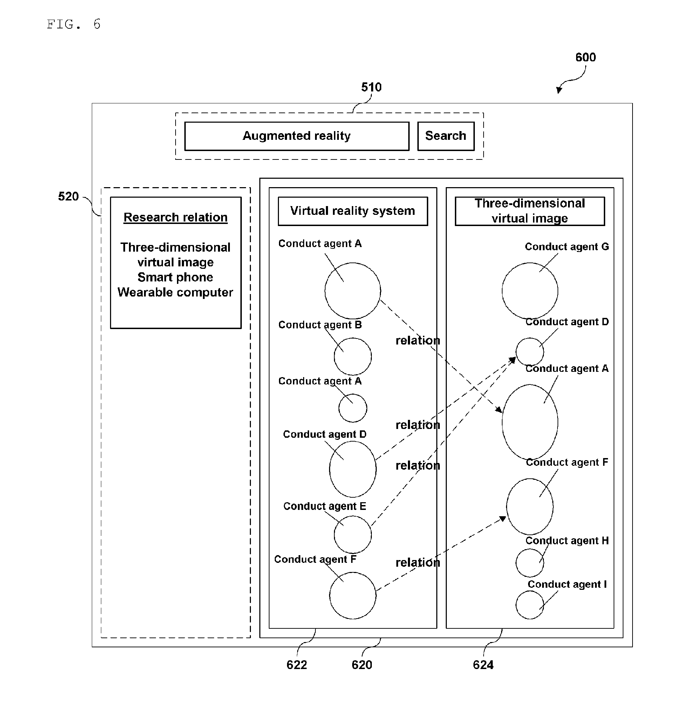

FIG. 4 is a flowchart illustrating a method of providing a related technology service for a specific technology by a related technology service providing apparatus according to the present invention, and FIGS. 5 and 6 are views showing examples of a related technology information providing screen according to the present invention.

Referring to FIG. 5, the related technology service providing apparatus constructs a database where conduct agents of each technology defined in a technical terminology dictionary or technologies performed by each conduct agent are defined S402.

After performing step S402, if a user inputs a research relation comparison command for a specific technology S404, the related technology service providing apparatus acquires conduct agents which research the specific technology from the constructed database S406.

Then, the related technology service providing apparatus acquires key research technologies for each acquired conduct agent S408. That is, the related technology service providing apparatus acquires research technologies of each conduct agent by searching the database and acquires N key research technologies among the acquired research technologies.

After performing step S408, the related technology service providing apparatus obtains a research relation between each key research technology and the specific technology S410.

That is, the related technology service providing apparatus accumulates the key research technologies of each conduct agent for each key research technology and calculates a frequency or a sum of research ratios of each key research technology. The calculated frequency of each key research technology or the sum of research ratios is a value of relation, and the related technology service providing apparatus obtains a relation between the specific technology and each key research technology using the value of relation.

For example, in the case where technology a, technology b, technology c and technology d are key research technologies of conduct agent A, technology a, technology c, technology e and technology f are key research technologies of conduct agent B, and technology b, technology d, technology e and technology f are key research technologies of conduct agent C, the related technology service providing apparatus calculates a frequency or a sum of research ratios of technology a, a frequency or a sum of research ratios of technology b, a frequency or a sum of research ratios of technology c, a frequency or a sum of research ratios of technology d, a frequency or a sum of research ratios of technology e, and a frequency or a sum of research ratios of technology f, respectively.

At this point, the related technology service providing apparatus determines the frequency or the sum of research ratios of each key research technology as a value of relation, and obtains whether a relation between the specific technology and the key research technology is high or low based on the value of relation. That is, the relation between the specific technology and the key research technology is high if the value of relation is large, whereas the relation between the specific technology and the key research technology is low if the value of relation is small.

After performing step S408, the related technology service providing apparatus sorts the key research technologies in descending order of the research relation and extracts and displays, on the screen, a certain number of key research technologies ranked on the top S410. At this point, the related technology service providing apparatus may display a certain number of key research technologies whose research relation is ranked on the top and values of research relation of the key research technologies as a list.

After performing step S410, if a specific key research technology is selected from the displayed list of key research technologies S412, the related technology service providing apparatus sorts and displays the selected specific key research technology and conduct agents of the specific research technology in order of the research ratio on the screen S414. At this point, if there are common research technologies among the displayed research technologies, the related technology service providing apparatus interconnects corresponding common research technologies.

A related technology information providing screen for displaying key research technologies in descending order of the research relation by the related technology service providing apparatus is as shown in FIG. 5.

Referring to FIG. 5, the related technology information providing screen 500 includes a specific technology input area 510 and a research relation information providing area 520. A specific technology, e.g., an augmented reality, inputted to provide related technology information is displayed in the specific technology input area 510. A certain number of related technologies (i.e., a virtual reality system, a three-dimensional virtual image, a smart phone, a wearable computer, and HMD) having a high research relation with respect to the specific technology inputted in the specific technology input area 510, or values of relation of the related technologies can be displayed in the research relation information providing area 520.

If specific key research technologies of 'virtual reality system' and 'three-dimensional virtual image' are selected from the research relation information providing area 520, research technology comparison information 620 containing conduct agents of the selected 'virtual reality system' and 'three-dimensional virtual image' sorted in order of research ratio is displayed on the screen 600 as shown in FIG. 6.

In the case of 'virtual reality system', conduct agents are sorted in order of conduct agent A, conduct agent B, conduct agent C, conduct agent D, conduct agent E and conduct agent F, and in the case of 'three-dimensional virtual image', conduct agents are sorted in order of conduct agent G, conduct agent D, conduct agent A, conduct agent F, conduct agent H and conduct agent I.

Since conduct agent A, conduct agent D and conduct agent F among the conduct agents displayed as described above are common conduct agents, corresponding common conduct agents are interconnected.

Although it is described above that a screen for providing a list of key research technologies is separated from a screen for displaying a specific key research technology and conduct agents of the specific key research technology, the list of key research technologies, and the specific key research technology and the conduct agents of the specific key research technology can be displayed on the same screen.

As described above, according to the present invention, a research relation between a specific technology of conduct agents which study the specific technology targeting the specific technology and key research technologies can be presented.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

## Claims

1. A computer implemented method of providing a related technology service by a related technology service providing apparatus, the method comprising the steps of:
(a) acquiring conduct agents of a specific technology;
(b) acquiring key research technologies of each acquired conduct agent; and
(c) accumulating the key research technologies of each conduct agent for each key research technology, obtaining a frequency or a sum of research ratios of each key research technology, and obtaining the frequency or the sum of research ratios of each key research technology as a value of relation between the specific technology and a corresponding key research technology.

2. The method according to claim 1, further comprising the step of, before step (a), analyzing documents stored in a multi-document providing apparatus, extracting and accumulating technologies and conduct agents, and constructing a database for storing conduct agents of each technology or research technologies studied by each conduct agent.

3. The method according to claim 2, wherein the database stores at least one of conduct agents of each technology, research technologies of each conduct agent, joint research agents of each research technology, the number of research documents of each conduct agent, and an accomplishment point calculated by applying a weighting factor of each time point or document type to the number of research documents.

4. The method according to claim 1, wherein whether a research relation is high or low between the specific technology and a corresponding key research technology is determined based on the value of relation of each key research technology.

5. The method according to claim 1, further comprising the step of, after step (c), sorting the key research technologies in descending order of the value of relation and providing the key research technologies as a list.

6. The method according to claim 5, further comprising the step of, if a specific key research technology is selected from the list of the key research technologies, sorting and displaying the specific key research technology and conduct agents of the specific technology in order of a research ratio.

7. The method according to claim 6, wherein if there are common conduct agents among the displayed conduct agents, the method interconnects and displays corresponding common conduct agents.

8. A related technology service providing apparatus including a storage and a processor, the apparatus comprising: a technology relation calculation module for acquiring conduct agents of a specific technology; acquiring key research technologies of each acquired conduct agent; and accumulating the key research technologies of each conduct agent for each key research technology, obtaining a frequency or a sum of research ratios of each key research technology, and obtaining the frequency or the sum of research ratios of each key research technology as a value of relation between the specific technology and a corresponding key research technology.

9. The apparatus according to claim 8, further comprising a database for storing at least one of conduct agents of each technology, research technologies of each conduct agent, joint research agents of each research technology, the number of research documents of each conduct agent, and an accomplishment point calculated by applying a weighting factor of each time point or document type to the number of research documents.

10. The apparatus according to claim 8, further comprising a database construction module for analyzing documents stored in a multi-document providing apparatus, extracting and accumulating technologies and conduct agents, and constructing a database for storing conduct agents of each technology or research technologies studied by each conduct agent.

11. The apparatus according to claim 8, further comprising a related technology information providing module for sorting the key research technologies in descending order of the value of relation and providing the key research technologies as a list, by the processor.

12. The apparatus according to claim 11, wherein if a specific key research technology is selected from the list of the key research technologies, the related technology information providing module sorts and displays the specific key research technologies and conduct agents of the specific technology in order of a research ratio, by the processor.

13. The apparatus according to claim 12, wherein if there are common conduct agents among the displayed conduct agents, the related technology information providing module interconnects and displays corresponding common conduct agents, by the processor.
